# EUROPEAN PATENT APPLICATION

(11) **EP 2 647 819 A1**
(43) Date of publication of application: **09.10.2013**
(21) Application number: 13460015.4
(22) Date of filing: 13.03.2013
(51) Int. Cl.: F02D 41/22, G01M 15/12

(54) **A method and a system for diagnosing injection systems of self-ignition engines**

(30) Priority: 05.04.2012 PL 39874312
(71) Applicant: Akademia Morska W Szczecinie, 70-500 Szczecin (PL)
(72) Inventor: Bejger, Artur, 71-685 Szczecin (PL)
(74) Representative: Kachnic, Tadeusz

(57) **Abstract**

The subject of the invention is a non-invasive method of diagnosing injection systems of self-ignition engines, marine engines in particular. The diagnostic method of the fuel injection process in a self-ignition engine in this invention is characterized by the fact that, without disturbing the injection system, in a close proximity of the injector, we measure energy pulses of an AE elastic wave signal, generated by the injection system, then the signal is recorded in a form of 50000 digital samples, after which twice more samples are created by inserting samples with mean values of the nearest samples. In the next step the whole set is divided into segments of 50 samples each, called time windows, with a length of half millisecond, then 150 zero samples are added at the beginning and end of each segment, next step being the addition of Hanning window function in the segments, in which then Fourier transformation is applied in order to find 50 spectral lines 0.5 kHz wide in each segment. The next step consists in deleting the time and frequency spectrogram, and thus obtained characteristics is analyzed in specific frequency bands, in which the highest signal energy occurs.

The system for diagnosing the fuel injection process in a self-ignition engine is characterized by an AE measurement sensor /2/, that is placed possibly close to the injector /1/, and pressed to the point of measurement with a constant force value, whereas the sensor /2/ is connected to a logger /3/ comprising a built-in spectral analyzer /4/ and a supply unit /5/, whose output is connected to a computer/6/.

## Description

The subject of this invention is a non-invasive method of diagnosing injection systems of self-ignition engines, particularly marine engines.

Presently world wide used method of diagnosing the injection system of self-ignition engines, particularly for marine engines mainly consists in an analysis of pressure changes occurring in the injection system. The major disadvantage of such diagnosing method is invading the injection system, which in case of some marine engines is not permitted by Classification Societies. There have been attempts to utilize the lift of injector needle, or so called piezoelectric clip - bands mounted on a high-pressure injection pipe. Those methods, however, provide only an approximate diagnostics of injection system components.

It is known from the Polish patent description PL 199 362 a method and a device for diagnosing injectors, consisting in an analysis of needle displacements by performing an envelope of a synchronously averaged spectrum, then determining the values of single harmonic components that are multiple frequencies of engine rotational speed. Depending on the values of spectrum component envelope values, needle displacement is qualified as being in one of the conditions belonging to a three-class scale for the evaluation of technical condition, extended with additional tolerance intervals of allowable condition, upper limit value and lower limit value, accounting for 3% to 10% of maximum needle displacement. Diagnostic methods used to date require that at least two or more parameters be checked for evaluating the technical condition of an injector and are invasive for the injection system.

The aim of this invention is the development of a simple non-invasive method and system for diagnosing fuel injection systems of normally running self-ignition engines equipped with a traditional injection system, a Common-Rail system, or dual-fuel systems of engines fed with liquid and gaseous fuel.

The diagnostic method of the fuel injection process in a self-ignition engine in this invention is characterized by the fact that, without disturbing the injection system, in a close proximity of the injector, using the phenomenon of acoustic emission (AE) we measure energy pulses of an elastic wave signal, generated by the injection system, then the signal is recorded in a form of 50000 digital samples, after which twice more samples are created by inserting samples with mean value from the nearest samples. In the next step the whole set is divided into segments of 50 samples each, called time windows, with a length of half millisecond, then 150 zero samples are added at the beginning and end of each segment, next step being the addition of Hanning window function in the segments, in which then Fourier transformation is applied in order to find 50 spectral lines 0.5 kHz wide in each segment. The next step consists in deleting the time and frequency spectrogram, and thus obtained characteristics is analyzed in specific frequency bands, in which the highest signal energy occurs.

In the first stage of signal processing, using Fourier transformation, we determine frequency bands with the highest energy of AE elastic wave signal and the instant at which the highest energy occurs. The next step consists in identifying that millisecond during the whole injection period at which the signal energy is the highest, and in analyzing changes in signal frequencies, the disturbance of which reflects incorrect work of the injector.

he measured source signal of AE elastic wave is recorded in a frequency band from 4.5 kHz to 50 kHz.

A spectrogram analysis for a conventional injection system is made in a frequency band ranging from 8 kHz to 16 kHz, at which the highest signal energy occurs.

A spectrogram analysis for a Common-Rail system is made in a frequency band ranging from 10 kHz to 25 kHz, at which the highest signal energy occurs.

AE elastic wave energy signal pulses are measured at a pipe nut connecting the injector with a high pressure (HP) injection pipe, placed as near as possible to the injector.

An AE measuring sensor is pressed with a constant force value of about 5 N to the pipe connecting the injector with a HP injection pipe or to a bolt fastening an injection pipe.

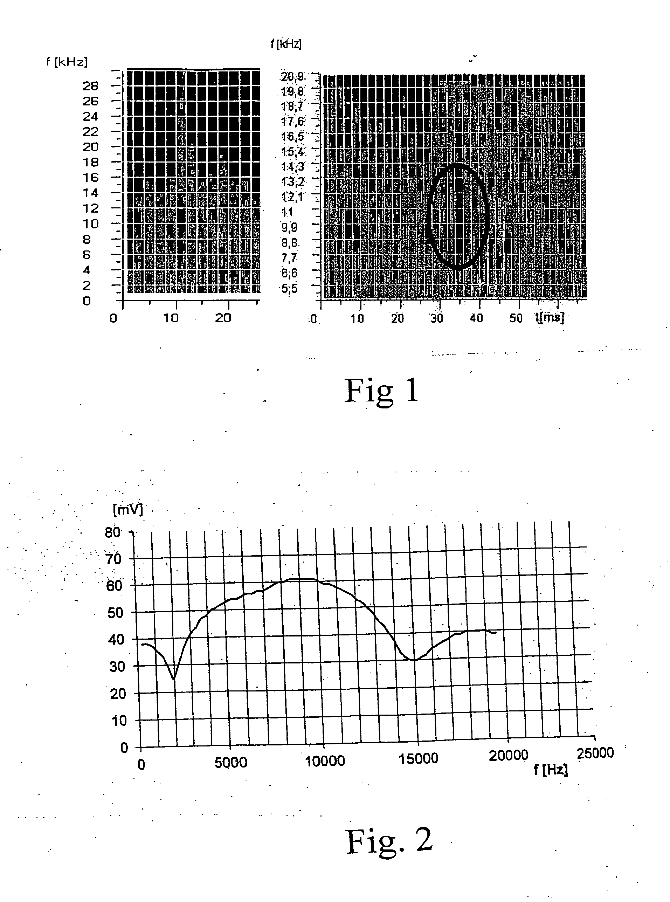

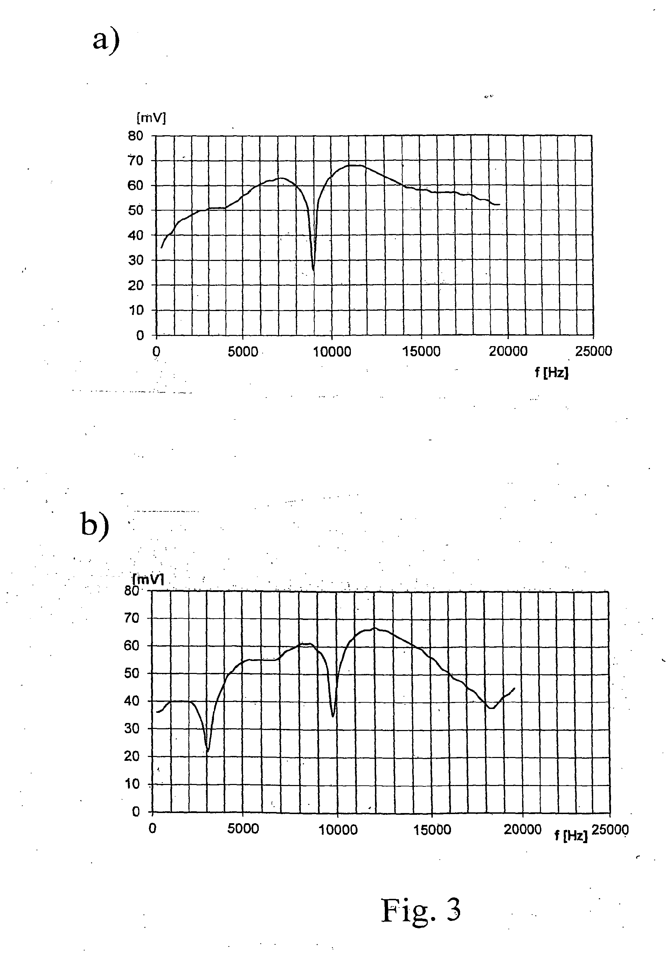

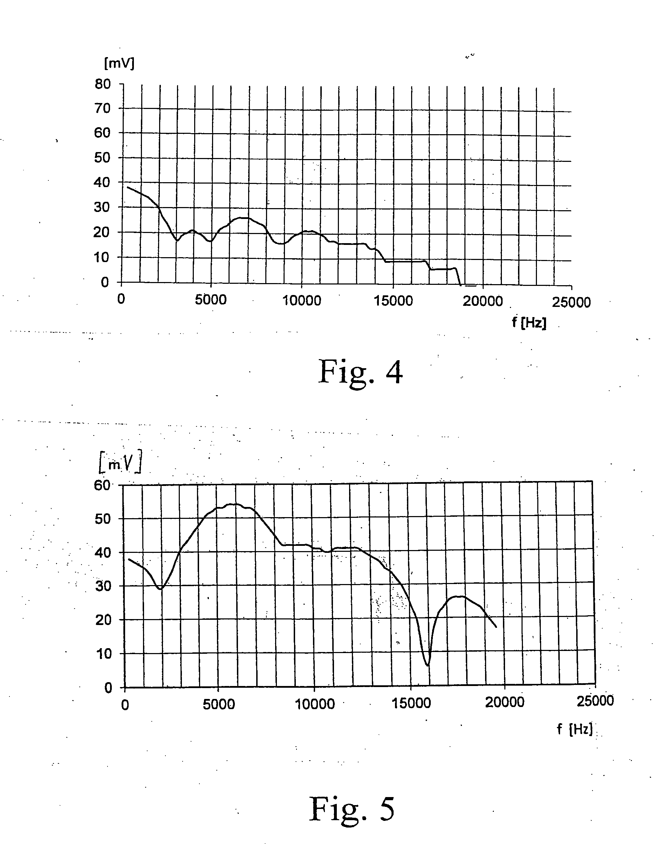

A comparison and analysis are made of the changes of frequency characteristics of AE elastic wave signal obtained from measurements, Fig. 3 and Fig. 4., while a frequency characteristic of AE elastic wave signal for a correctly operating injector is given in Fig. 2.

The analysis result of changes in frequencies of AE elastic wave signal is presented on a computer screen.

In case of a correctly working injector but an incorrectly working injector pump, the maximum amplitude of AE frequency signal is shifted towards lower frequencies ranging from 4 to 7 kHz.

A system for diagnosing the fuel injection process in a self-ignition engine is characterized by a presence of an AE measurement sensor, placed possibly close to the injector, and pressed to the point of measurement with a constant force value, whereas the sensor is connected to a logger /3/ comprising a built-in spectral analyzer and a supply unit, that output is connected to a computer.

The method according to this invention has an application for investigating an AE signal, used in turn for diagnosing injection systems of self-ignition engines fitted with a conventional injection system, a Common-Rail system and systems of dual-fuel engines partly running on liquid fuel as so called pilot fuel charge and gaseous fuel.

The examination of fuel injection is performed on a running engine, whereas the method has not been used before and consists in utilizing an acoustic emission signal - understood as per the PN-EN 1330-9 and PN-EN 13554 standards as an elastic wave expanding in a material under an impact of external stimulus.

A beneficial effect of this invention is that it allows to carry out a precise examination of the entire injection process taking into account the phenomena occurring during injection. The measurement is simple to make and can be later used in diagnosing an injection system. Additionally, the measurement allows to examine so called repeatability of the injection process and, with no need of a team of assessors, it is made by one person. Repeatability or inversely, non-repeatability of an injection process is understood as the difference between individual fuel injections during engine operation. The method allows to record simultaneously process time-variable signals that can be conveyed to a computer. Useful values of the AE signal energy are shown on a display of any PC or laptop computer fitted with an USB port.

The invention allows to carry out a non-invasive diagnostics of injection systems of self-ignition low or high power engines, as in both cases signal processing and graphic image of a fault are the same. Also, regardless of engine power, a frequency band characteristic of a specific fault is the same. Diagnosing takes place without disturbing the injection system as a whole, without dismantling or inserting additional sensors in the injection system, which makes the system suitable also for diagnosing marine dual-fuel systems fed with liquid fuel and gas, such as those used on LNG tankers.

The subject of this invention is graphically illustrated by examples of its performance outcome, where Fig. 1 presents a spectrogram, i.e. time-frequency characteristics with a vital for the analysis frequency band marked on the chart, Fig. 2 presents a frequency characteristic of a correctly working injector, Fig. 3 shows a characteristic of a blocked injector, Fig. 4 depicts a frequency characteristic of a so called leaking injector with decalibrated atomizer holes, Fig. 5 presents a frequency characteristic of a damaged injection pump, Fig. 6 shows a spectral density of AE signal from five consecutive injections, and finally, Fig. 7 displays a system for diagnosing duel injection process in a self-ignition engine.

The execution of the method of fuel injection process diagnostics in a marine self-ignition engine, according to this invention, can be described as follows: a sensor of acoustic emission placed on a pipe connecting a HP injection pipe with the injector, then AE source signals or useful descriptors are recorded. An averaged value of energy is measured at each engine cylinder, which allows to make a preliminary verification whether the injection system operates correctly or not, by comparing how much, if at all, the energy values differ from average values.

An essential feature of the injection measurement method is that an AE sensor is placed on the nut connecting the injection pipe with the injector, which makes the method non-invasive, by no means disturbing the injection process. This is the way signal pulses of acoustic emission generated by the injection system are transmitted. The signals are sent to a measuring instrument of a logger 3 and a spectral analyzer 4.

The method of injection process measurements consists in that the AE sensor 2 is placed on a connector pipe or on a nut connecting the injector with a HP injection pipe possibly close to the injector. The sensor is connected by a lead to the logger 3 and the spectral analyzer 4. During a measurement, AE pulses, generated in the injector system, are sent to an AE converter 2, thence via a lead signals are transmitted to the logger 3 and the analyzer 4.

The results of source signal measurement are processed with a Fourier analysis, leading to an amplitude-frequency characteristic, shown in Fig. 1, with a 0.5 Hz frequency resolution. This is the first stage of signal processing, through which frequency bands including the highest signal energy, as shown in Fig. 1, and the instant at which the highest energy occurs. In Fig. 1 this is a dark area indicated by an arrow. In the next step the millisecond at which the highest energy occurs is identified out of the entire injection time. For example, if the injection duration is 3 ms, and the highest energy occurs at the 2nd millisecond of injection, it is at that instant that signal frequency change should be examined, as shown in Figs 1 to 4. To put it simply, we split the signal image in Fig. 1 at a specific instant by a vertical line, thus obtaining a characteristic of AE frequency changes. If the maximum value of those signals is found within 8 to 14 kHz frequency range and it has a regular shape, as in Fig. 2, it means the injector under examination works correctly and its injection process is not disturbed. Each disturbance, caused by decalibration or blocking of the holes, or gradual needle seizure, or overflow in Common-Rail injectors, the frequency will be disturbed. Fig. 4 presents an example of signals recorded for a decalibrated, so called leaking injector with increased atomizer holes.

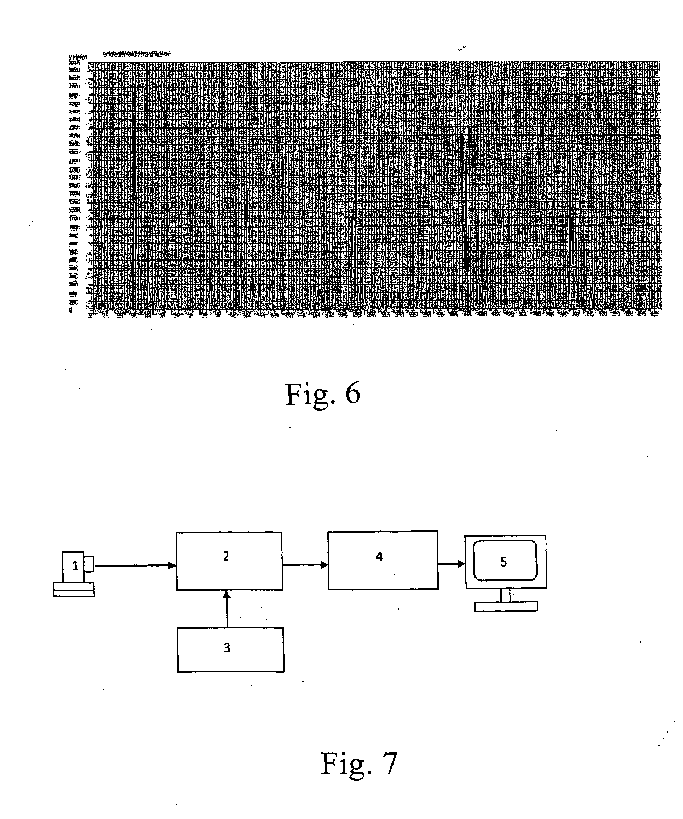

By graphical comparison of the AE signal spectral density - Fig. 6 - injection repeatability is determined. Changes can be observed in successive fuel injections into the engine combustion chamber. Signal sensitivity to changes in spectral density depends on the counter pressure in the combustion chamber and under-needle pressure, dependent on atomizer's condition.

If an injector works correctly, but the injection pump does not, the maximum amplitude of AE frequency signal is shifted towards lower frequencies in the 4 - 7 kHz range.

The AE elastic wave source signal is measured by means of a system composed of a sensor 2, mounted on a bolt fastening an injection pipe. The sensor 2 is pressed to the bolt fastening the injection pipe with a constant force of 5 N. The AE sensor 2 is connected to a logger 3 and spectral analyzer 4, whose output is connected to a computer 6, where a monitor displays a result of analyzed AE elastic wave signal frequencies changes. A supply unit 5 is connected to the logger 3.

## Claims

1. A method of diagnosing process of fuel injection in a self-ignition engine consisting in performing a synchronously averaged spectrum envelope wherein without disturbing the injection system, in its direct proximity measurements are made of acoustic emission elastic wave signal energy pulses, generated by the injection system, then the signal is recorded as a series of 50,000 digital samples, and a twice larger number of samples is created by inserting samples of average value taken from nearest samples, then all samples are divided into 50 sample segments, called time windows, with a length of half millisecond, then 150 zero samples are added at the beginning and end of each segment, next step being the addition of Hanning window function in each segment, in which then Fourier transformation is applied in order to find 50 spectral lines 0.5 kHz wide, then the time and frequency spectrogram is deleted, and thus obtained characteristics is analyzed in specific frequency bands, in which the highest signal energy occurs.

2. The method of claim 1, wherein in the first stage of signal processing, using Fourier transformation, we determine frequency bands with the highest energy of AE elastic wave signal and the instant at which the highest energy occurs, and the next step consists in identifying that millisecond during the whole injection period at which the signal energy is the highest, and in analyzing changes in signal frequencies, the disturbance of which reflects incorrect injector work.

3. The method of claim 1, wherein the measured source signal of AE elastic wave is recorded in a frequency band from 4.5 kHz to 50 kHz.

4. The method of claim 1, wherein a spectrogram analysis for a conventional injection system is made in a frequency band ranging from 8 kHz to 16 kHz, at which the highest signal energy occurs.

5. The method of claim 1, wherein a spectrogram analysis for a Common-Rail system is made in frequency bands ranging from 10 kHz to 25 kHz, at which the highest signal energy occurs.

6. The method of claim 1, wherein AE elastic wave energy signal pulses are measured at a pipe connecting the injector with a high pressure injection pipe, placed as near as possible to the injector.

7. The method of claim 1, wherein an AE measuring sensor /2/ is pressed with a constant force value of about 5 N to the pipe connecting the injector with a HP injection pipe or to a nut fastening the injection pipe.

8. The method of claim 1, wherein a comparison and analysis are made of the changes of frequency characteristics of AE elastic wave signal obtained from measurements, Fig. 3 and Fig. 4., while a frequency characteristic of AE elastic wave signal for a correctly operating injector is given in Fig. 2.

9. The method of claim 1, wherein the analysis result of changes in frequencies of AE elastic wave signal is presented on a computer screen /6/.

10. The method of claim 1, wherein in case of a correctly working injector but an incorrectly working injector pump, the maximum amplitude of AE frequency signal is shifted towards lower frequencies ranging from 4 kHz to 7 kHz.

11. The system for diagnosing the fuel injection process in a self-ignition engine, wherein the AE measurement sensor /2/ is placed possibly close to the injector /1/, and pressed to the point of measurement with a constant force value, whereas the sensor /2/ is connected to a logger /3/ comprising a built-in spectral analyzer /4/ and a supply unit /5/, whose output is connected to a computer /6/.
